# EUROPEAN PATENT SPECIFICATION

(11) **EP 2 750 513 B1**
(45) Date of publication and mention of the grant of the patent: **15.05.2019**
(21) Application number: 12766373.0
(22) Date of filing: 30.08.2012
(51) Int. Cl.: A23G 1/48

(54) **COCOA COMPOSITION , PROCESS AND PRODUCT**
KAKAOZUSAMMENSETZUNG, VERFAHREN DAFÜR UND PRODUKT DAMIT
COMPOSITION DE CACAO, PROCÉDÉ ET PRODUIT

(30) Priority: 31.08.2011 GB 201114962
(43) Date of publication of application: 09.07.2014
(73) Proprietor: Barry Callebaut AG, 8005 Zurich (CH)
(72) Inventor: BERNAERT, Herwig, B-9280 Lebbeke-Wieze (BE); BLONDEEL, Ieme, B-9280 Lebbeke-Wieze (BE); DE RUYSSCHER, Ive, B-9280 Lebbeke-Wieze (BE)
(74) Representative: Holman, Timothy Peter Laverton
(86) International application number: PCT/CH2012/000207
(87) International publication number: WO 2013/029193

(56) References cited:
- EP-A2- 0 168 897
- WO-A1-2010/124936
- BE-A6- 1 003 494
- DE-U1-202004 010 272
- FR-A1- 2 648 679
- GB-A- 1 106 639
- JP-A- 2010 172 327
- NL-C2- 1 016 372
- US-A- 2 198 207
- US-A- 2 227 063
- US-A1- 2006 222 753
- US-A1- 2011 059 224

## Description

This invention relates to cocoa-based products comprising unroasted or mildly roasted coffee as bulk ingredient, in particular to chocolate with high cocoa content lacking any coffee flavour and characterized by a mild cocoa taste, to the process for its preparation and to products made from coffee-containing cocoa.

Of the four basic tastes, bitter is the most complex and least understood. Bitter compounds in cocoa mostly include plant-derived catechins, procyanidins and methylxanthines (Drewnowski, A. Nutrition Reviews 2001; 59.6: 163.). The perceived bitterness of caffeine, e.g., can be decreased by sucrose and mocha aroma, whereas chocolate and coffee aroma significantly increase the caffeine-related bitterness (Keast, R. S. J. Food Quality and Preference 2008; 19.5: 465-472.).

Since coffee and cocoa powder make an attractive combination, many recipes are known using both ingredients to manufacture biscuits or beverages (http://www.gourmetcoffeeshop.net), e.g. chocolate cupcakes and chocolate cakes which comprise brewed coffee made from roasted coffee beans (http://glutenfreefix.com; http://nuttermother.com). Furthermore, confectioneries based on chocolate and coffee are available on the market, uniting the aroma of coffee with the physicality of chocolate. By treating coffee beans like cocoa beans, coffee provides colour and flavour, aided by sweeteners, while cocoa butter provides texture (http://www.coffee-blend.net).

Patent GB15735 discloses a method for treating and preparing cocoa, and of blending the same for liquoring together with pure ground coffee. Cocoa is roasted separately and added to fully roasted coffee.

UK Provisional Specification No. 2695 relates to a process for the manufacture of a coffee product, a cocoa product or a combined coffee and cocoa product, for use as a confection.

Patent specifications GB1106638 and GB 1106639 claim improvements in or relating to the preparation of soluble cocoa powder, the cocoa powder being mixed with coffee extract or coffee substitute dissolved in an aqueous liquid.

With respect to DE3821378A1, new coffee-chocolate sweets based *inter alia* on caffeine-containing or decaffeinated roasted coffee are described, which can be made with any desired balance of the coffee/chocolate flavour.

According to German document DE19540014A1, a composition containing *inter alia* 60 to 95 % roasted and powdered coffee beans and 0.1 to 0.3 % cocoa powder is disclosed.

In patent DE4139638C1 coffee pralines comprising single roasted bean core and chocolate material coating are described.

Document DE102004030200A1 claims a powdered preparation containing finely ground roasted coffee in a chocolate matrix. The coffee particles are embedded in the matrix, which protects against adverse effects of oxidation, and enhances retention of flavour and aroma compounds, and hence sensory properties. This product is suitable for use in instant beverages, especially in cappuccino.

US2006222753A1 focuses on cacao products in which all or substantially all of the cacao powder is replaced by roasted and finely ground coffee beans. Chocolate flavour is altered by using roasted coffee as principle flavouring agent. An aspect of this invention is a process by which a confection product having organoleptic properties of chocolate is obtained.

Patent application JP2010172327A describes a chocolate-coated coffee bean and a method for its manufacture. This method includes, *inter alia,* roasting of the enzyme-treated coffee beans and coating the treated coffee beans with vegetable oil and/or fat and chocolate. Use of enzyme-treated coffee beans improves mouthfeel and eating quality of the product whilst maintaining a distinct coffee flavour.

WO2010124936A1 claims a food or beverage composition such as cocoa or chocolate beverages or chocolate products comprising *inter alia* at least 0.1 % coffee solids, wherein at least 80% of said coffee solids are water soluble. This publication refers to instant products with a refreshing, yet coffee-like character.

US2227063A discloses the production of edible bread and particularly a cake or pastry flour from coffee beans, and to the recovery of caffeine as by-product.

US2198207A relates to a method of stabilizing roasted coffee which comprises applying to the roasted coffee immediately following roasting and while the coffee beans are at a temperature in excess of 250 °F a small amount of green coffee bean flour in aqueous dispersion.

EP0168897A2 relates to a solid product of a certain particle size and obtained from coffee beans, characterized in that it is mainly due to the grinding green coffee beans to be used for the constitution of drinks and solid foods and to use externally.

FR2648679A1 discloses a mixture based on coffee, consisting of non-roasted powdered coffee and other products, which are finely ground, especially cereal grain and/or chicory, figs, acorns, carnitine and exudate from the ash-tree.

BE1003494A6 discloses a cocoa-based preparation comprising a chocolate formed by a mass of cocoa, sugar, cocoa butter, lecithin and vanillin, and characterised by addition of coffee ground with incorporation of concentrated coffee.

NL1016372C2 discloses a solid sweet product comprising fat, sweetener and coffee, giving the feel of chocolate and the stimulating effect of coffee.

DE202004010272U1 relates to a pulverulent composition containing finely ground roast coffee powder that is embedded in a matrix. The inclusion of the roast coffee powder in the matrix ensures effective protection against oxidation. Said pulverulent composition is particularly suitable for incorporation into instant beverages containing coffee and/or cocoa.

Publication US20110059224A1 discloses a chocolate candy bar product having a coffee flavour, wherein the coffee flavour is from roasted ground coffee or from a liquid solid or dried coffee extract or an instant coffee.

Regarding the modification of bitter taste, EP1399034B1 provides a consumable containing an amount of chlorogenic acid sufficient for taste modification or enhancement and derived from green coffee bean extract. A particular source of chlorogenic acid are green *Robusta* coffee beans. JP2009072208A also makes reference to chlorogenic acid abundantly contained in raw coffee beans, which can be used in crude or purified form as a hot taste enhancer.

The present applicants have sought to find an economically improved process for reducing bitterness in chocolate containing high amounts of cocoa, for example 40 to 60 wt-% or higher, e.g. 65 to 85 wt-%, e.g. 70 wt-%.

In one aspect, therefore, this invention provides a composition according to claim 1.

The cocoa beans may be of African, Asian, Central American or South American origin and may be unfermented, fermented or well-fermented.

Cocoa liquor may be made by standard processes, e.g. as described in Fincke, H., "Handbuch der Kakaoerzeugnisse", 2. Auflage 1965.

Ground coffee is accepted as optional ingredient of cocoa products according to national regulations, e.g. in the European Food Legislation or in the US Food Legislation which follows the international CODEX, according to which up to 40 wt-% of Dried Fat-Free Cocoa (DFFC) may be replaced by ground coffee. The coffee beans (*Arabica* or *Robusta* species) may be of African, Asian, Central American or South American origin.

Whereas coffee beans start to develop a recognizable coffee taste when roasted around 200 °C bean temperature or higher for at least 1 hour, the roasting temperatures applied for cocoa beans (bean temperature around 120 to 130 °C) are not high enough to provide a coffee flavour when applied to coffee beans (see Fincke, H. "Handbuch der Kakaoerzeugnisse", 2. Auflage 1965). Therefore, mixtures of cocoa beans and coffee beans do not develop a characteristic coffee aroma when being processed under parameters conventional for cocoa. Moreover, "green", i.e. unroasted coffee does not provide any recognisable coffee flavour at all and contains significantly higher amounts (up to 14 wt-%) of polyphenols as main antioxidative compounds (Farah, A. Brazilian Journal of Plant Physiology 2006; 18.1: 23).

In contrast to cocoa-coffee compositions hitherto known, wherein sufficiently roasted coffee has been used to provide an explicit coffee flavour in the final product, the present invention claims cocoa-coffee compositions comprising unroasted or mildly roasted coffee as bulk ingredient. On the one hand, this ingredient serves as volume filler replacing cocoa by cheaper coffee, on the other hand, it considerably reduces the bitter taste frequently associated with high-cocoa chocolate. This is because the content of non-fat cocoa is reduced and coffee partially masks cocoa bitterness, resulting in a disproportionally mild cocoa taste. In addition, mildly processed green coffee beans contain high amounts of phenolic compounds such as e.g. chlorogenic acid. Therefore, chocolate enriched in polyphenols and which lacks any coffee flavour can be produced.

Since unroasted coffee beans are very hard and would overstrain the mills used in the production chain, these beans have to be soaked or mildly treated with heat in advance in order to become softer. Alternatively, the beans may be made brittle by freezing in liquid nitrogen and subsequently crushed. Mild treatment conditions, e.g. with regard to roasting parameters, significantly reduce the milling problem associated with green coffee, while the specific coffee flavour is not developed in a recognisable way.

In another aspect, this invention provides a process according to claim 2. Only the cocoa beans are roasted and then mixed with unroasted or mildly roasted green coffee beans. Grinding of this mixture results again in a coffee-containing cocoa liquor, optionally followed by a mixing step in which further ingredients such as sucrose, cocoa butter or milk powder may be added.

In a further aspect, this invention provides the use of green coffee as a filler for chocolate according to claim 4. Described (but not part of the invention) are coffee-containing food products having high cocoa solids content. These food products may comprise chocolate or chocolate compositions, dairy products, fillings, compounds and beverages. Possible applications may include chocolate fillings, cocoa beverages, ice cream, mousse, pralines, tablets, vending mixes, enrobing of biscuits or savory crackers.

Taste may be assessed by a taste panel of e.g. 10 experienced tasters.

Following is a description by way of example only of processes and products of this invention.

### Example 1a. Coffee-cocoa composition

A recipe for the production of chocolate using unroasted or mildly roasted coffee as volume filler contains the following ingredients:

| | |
|---|---|
| ◆ Cocoa liquor | 41.0 wt-% |
| ◆ Cocoa powder | 14.0 wt-% |
| ◆ Ground coffee | 10.0 wt-% |
| ◆ Cocoa butter | 18.7 wt-% |
| ◆ Sucrose | 16.0 wt-% |
| ◆ Lecithin, Vanilla | 0.3 wt-% |
| | 100.0 wt-% |

The compositions of this invention may be prepared using conventional ingredient mixing and processing methods. According to food legislation, the chocolate resulting from the above recipe is declared as chocolate containing 82 wt-% cocoa. Its bitterness and cocoa content, however, correspond to chocolate containing 65 wt-% cocoa. Its taste assessed by a taste panel is perceived as mild cocoa flavour without any significant coffee aroma or flavour, whereas the taste of a standard chocolate containing 80 wt-% cocoa and 0.1 to 1 wt-% powdered roasted coffee beans is already characterized by a strong coffee-like aroma.

### Example 1b. Coffee-cocoa composition

In order to mimic the taste and flavour of chocolate containing 50 to 60 wt-% cocoa by a chocolate containing 82 wt-% cocoa, up to 0.3 wt-% of e.g. cocoa butter in the recipe as listed above may be replaced by a sweetener such as stevia. The natural sweetener stevia is extracted from the leaves of *Stevia rebaudiana* and consists of stevioside as main component among several minor components such as rebaudiosides and dulcosides (Eisenbrand, G. "ROMPP Lexikon Lebensmittelchemie", 2. Auflage 2006).

### Example 2. Coffee-cocoa composition

An alternative recipe for the production of chocolate using unroasted or mildly roasted coffee as volume filler comprises the following ingredients:

| | |
|---|---|
| ◆ Cocoa liquor | 38.68 wt-% |
| ◆ Cocoa powder | 11.69 wt-% |
| ◆ Ground coffee | 9.11 wt-% |
| ◆ Cocoa butter | 15.07 wt-% |
| ◆ Sucrose | 24.87 wt-% |
| ◆ Soya lecithin | 0.55 wt-% |
| ◆ Vanilla | 0.01 wt-% |
| ◆ Stevia | 0.02 wt-% |
| | 100.00 wt-% |

This composition contains at least 70 wt-% cocoa solids, but tastes such as a chocolate containing 50 to 60 wt-% cocoa solids as assessed by a taste panel.

The compositions of this invention demonstrate several advantages over hitherto known coffee-containing cocoa products and high-cocoa chocolate. Thus, the compositions of this invention
- may be produced more economically on an industrial scale;
- provide a mild taste profile in spite of high cocoa content;
- are suitable to produce chocolate having enhanced polyphenol content without disturbing bitterness;
- provide an extraordinary content of antioxidants (partly because of the green coffee);
- provide a broad area of applicability.

## Claims

1. A composition comprising chocolate and green coffee, wherein cocoa bitterness is reduced, which composition has no coffee flavour and contains 41 wt-% cocoa liquor, 14 wt-% cocoa powder, 10 wt-% ground coffee, 18.7 wt-% cocoa butter, 16 wt-% sucrose, 0.3 wt-% lecithin and vanilla, and up to 0.3 wt-% stevia replacing cocoa butter,
or
38.68 wt-% cocoa liquor, 11.69 wt-% cocoa powder, 9.11 wt-% ground coffee, 15.07 wt-% cocoa butter, 24.87 wt-% sucrose, 0.55 wt-% soya lecithin, 0.01 wt-% vanilla and 0.02 wt-% stevia.

2. A process for the preparation of chocolate containing coffee, which comprises the steps of
(a) roasting cocoa beans;
(b) mixing the roasted cocoa beans of (a) with green coffee beans;
(c) grinding the mixture of (b) to a coffee-containing cocoa liquor; and
(d) mixing the coffee-containing cocoa liquor of (c) with further ingredients.

3. The process as claimed in claim 2, wherein steps (a) and (b) are replaced by the step of roasting cocoa beans together with coffee beans at a temperature around 120 to 130 °C, and wherein steps (c) and (d) are replaced by the step of grinding the roasted cocoa and coffee beans to a coffee-containing cocoa liquor.

4. Use of green coffee as filler for chocolate containing an enriched amount of phenolic compounds such as chlorogenic acid and lacking any coffee flavour, **characterised by** a reduced bitter taste associated with chocolate containing high amounts of cocoa between 40 to 70 wt-%.

## Patentansprüche

1. Zusammensetzung umfassend Schokolade und grünen Kaffee mit verringerter Bitterkeit des Kakaos, wobei die Zusammensetzung kein Kaffeearoma aufweist und 41 Gew.-% Kakaomasse, 14 Gew.-% Kakaopulver, 10 Gew.-% gemahlenen Kaffee, 18.7 Gew.-% Kakaobutter, 16 Gew.-% Sucrose, 0.3 Gew.-% Lecithin und Vanille sowie bis zu 0.3 Gew.-% Stevia als Ersatz für Kakaobutter enthält,
oder
38.68 Gew.-% Kakaomasse, 11.69 Gew.-% Kakaopulver, 9.11 Gew.-% gemahlenen Kaffee, 15.07 Gew.-% Kakaopulver, 24.87 Gew.-% Sucrose, 0.55 Gew.-% Soja-Lecithin, 0.01 Gew.-% Vanille und 0.02 Gew.-% Stevia enthält.

2. Verfahren zur Herstellung Kaffee-haltiger Schokolade, umfassend die Schritte
(a) Rösten von Kakaobohnen;
(b) Mischen der gerösteten Kakaobohnen (a) mit grünen Kaffeebohnen;
(c) Vermahlen der Mischung (b) zu einer Kaffee-haltigen Kakaomasse; und
(d) Mischen der Kaffee-haltigen Kakaomasse (c) mit weiteren Zutaten.

3. Verfahren gemäss Anspruch 2, wobei Schritte (a) und (b) ersetzt werden durch das Rösten von Kakaobohnen zusammen mit Kaffeebohnen bei einer Temperatur um 120 bis 130 °C, und wobei Schritte (c) und (d) ersetzt werden durch Vermahlen der gerösteten Kakao- und Kaffeebohnen zu einer Kaffee-haltigen Kakaomasse.

4. Verwendung von grünem Kaffee als Füllmaterial für Schokolade, welche mit phenolischen Substanzen wie Chlorogensäure angereichert ist, keinerlei Kaffeearoma aufweist und durch verringerten Bittergeschmack charakterisiert ist, welcher Schokolade mit hohem Kakaogehalt zwischen 40 und 70 Gew.-% auszeichnet.

## Revendications

1. Une composition comprenant du chocolat et du café vert, dans laquelle l'amertume du cacao est réduite, laquelle composition n'a pas d'arôme de café et contient 41 % en poids de liqueur de cacao, 14 % en poids de poudre de cacao, 10 % en poids de café moulu, 18,7 % en poids de beurre de cacao, 16 % en poids de saccharose et 0.3 % en poids de lécithine et de vanille, et jusqu'à 0,3 % en poids de stévia remplaçant le beurre de cacao,
ou
38,68 % en poids de liqueur de cacao, 11,69 % en poids de poudre de cacao, 9,11 % en poids de café moulu, 15,07 % en poids de beurre de cacao, 24,87 % en poids de saccharose, 0,55 % en poids de lécithine de soja, 0,01 % en poids de vanille et 0,02 % en poids de stévia.

2. Un procédé de préparation de café contenant du chocolat, qui comprend les étapes consistant à
(a) torréfier des fèves de cacao;
(b) mélanger les fèves de cacao torréfiées de l'étape (a) avec des grains de café vert;
(c) broyer le mélange de l'étape (b) en une liqueur de cacao contenant du café; et
(d) mélanger la liqueur de cacao contenant du café de l'étape (c) avec d'autres ingrédients.

3. Le procédé selon la revendication 2, dans lequel les étapes (a) et (b) sont remplacées par l'étape consistant à torréfier des fèves de cacao avec des grains de café à une température d'environ 120 à 130 °C, et dans lequel les étapes (c) et (d) sont remplacées par l'étape consistant à moudre les fèves de cacao et les grains de café torréfiés en une liqueur de cacao contenant du café.

4. Utilisation de café vert comme charge pour du chocolat contenant une quantité enrichie en composés phénoliques tels que de l'acide chlorogénique et sans arôme de café, **caractérisée par** un goût amer réduit associé au chocolat contenant de grandes quantités de cacao, entre 40 et 70 % en poids.
